Europäisches Patentamt

European Patent Office

Office européen des brevets

(11) Publication number: **0 186 491 B1**

# EUROPEAN PATENT SPECIFICATION

(45) Date of publication of patent specification: **17.06.92** (51) Int. Cl.5: **H01J 35/00, H05H 1/22**

(21) Application number: **85309408.4**

(22) Date of filing: **23.12.85**

(54) **Apparatus for producing soft X-rays using a high energy beam.**

(30) Priority: **26.12.84 JP 273222/84**
**26.12.84 JP 273223/84**

(43) Date of publication of application:
**02.07.86 Bulletin 86/27**

(45) Publication of the grant of the patent:
**17.06.92 Bulletin 92/25**

(84) Designated Contracting States:
**DE FR GB**

(56) References cited:
**WO-A-83/03674**
**US-A- 3 094 474**
**US-A- 3 378 446**
**US-A- 3 388 314**
**US-A- 4 058 486**

**JOURNAL OF PHYSICS E; SCIENTIFIC IN-STRUMENTS, vol. 7, no. 9, September 1974, pages 715-718; U. SCHWENN et al.: "A continuous droplet source for plasma production with pulse lasers"**

**PATENT ABSTRACTS OF JAPAN, vol. 6, no. 247 (E-146)[1125], 7th December 1982; & JP-A-57 145 257 (FUJITSU K.K.) 08-09-1982**

(73) Proprietor: **KABUSHIKI KAISHA TOSHIBA**
**72, Horikawa-cho Saiwai-ku**
**Kawasaki-shi Kanagawa-ken 210(JP)**

(72) Inventor: **Noda, Etsuo c/o Patent Division**
**Toshiba Corporation Principal Office**
**1-1, Shibaura 1-chome Minato-ku Tokyo(JP)**
Inventor: **Suzuki, Setsuo c/o Patent Division**
**Toshiba Corporation Principal Office**
**1-1, Shibaura 1-chome Minato-ku Tokyo(JP)**
Inventor: **Morimiya, Osami c/o Patent Division**
**Toshiba Corporation Principal Office**
**1-1, Shibaura 1-chome Minato-ku Tokyo(JP)**

(74) Representative: **Kirk, Geoffrey Thomas et al**
**BATCHELLOR, KIRK & CO. 2 Pear Tree Court**
**Farringdon Road**
**London EC1R 0DS(GB)**

EP 0 186 491 B1

## Description

This invention relates to an apparatus for producing soft x-rays by impinging a laser beam on to a target made of a liquid metal to produce plasma at high energy density and high temperature. More particularly, the invention relates to a plasma x-ray apparatus used in an x-ray exposure apparatus in a semiconductor manufacturing system.

As is generally known, soft x-rays are generated by plasma at high temperature and high density. Plasma having high temperature and high density can be instantly produced by impinging a laser beam upon the surface of a solid metal target. The x-rays produced from such plasma are characterised by (1) high brightness, (2) the x-ray beam has a nearly pin point source, (3) x-rays have a sharp pulse, and (4) if a YAG-laser which has a large duty cycle is used, the x-ray source can be used repeatedly.

Plasma x-ray apparatus has been used experimentally in submicron x-ray lithography and in measurement apparatus. In such experimental apparatus, a laser beam has been used to impinge on a target formed by a solid metal surface. This experimental apparatus is disclosed in "Sov. Phys. Tech.", Phys., 28-(7), p 863 (1983); "Submicron X-ray Lithography Using Laser-Produced Plasma As A Source", B. Yaakobt et al, Appl. Phys, Lett. 43(7), 1 pg, 686-688 (October 1983). However, if such experimental apparatus is used in a practical application, several disadvantages would result, namely, it would require regular replacement of the target material and the vacuum of the vessel must be broken when the target material is used up and has to be replaced.

It is known from US-A-3388314 for a light beam to be sent into an evacuated enclosure to impinge upon a thin sheet of mercury therein and this produces x-rays. The sheet of mercury is formed by delivering the mercury to a rotating disc and the centripetal force due to the rotation of the disc spreads the mercury into a sheet.

It is also known from US-3378446 for a dispenser to dispense droplets of a liquid into an evacuated chamber where they are impinged upon by a laser beam.

In accordance with this invention there is provided apparatus for producing x-rays comprising a low pressure vessel; a window in the wall of the vessel; means located outside the vessel for generating a high energy laser beam and directing it through the window to an impact area in the vessel; a liquid target at the impact area in the vessel, said target serving to emit x-rays when impacted by the laser beam; characterised in the provision of a dispenser by which discontinuous drops of the target liquid are allowed to fall to the impact area, and control means which serves both to operate the dispenser to produce a drop of the target liquid and to generate the high energy laser beam so as to synchronise the arrival of the drop and the high energy laser beam at the impact area.

In order that the invention may be more readily understood, it will now be described, by way of example only, with reference to the accompanying drawings, in which:-

Figure 1 is a schematic sectional view of apparatus for the production of x-rays according to an embodiment of the invention;

Figure 2 illustrateS a modification of part of the vessel shown in Figure 1;

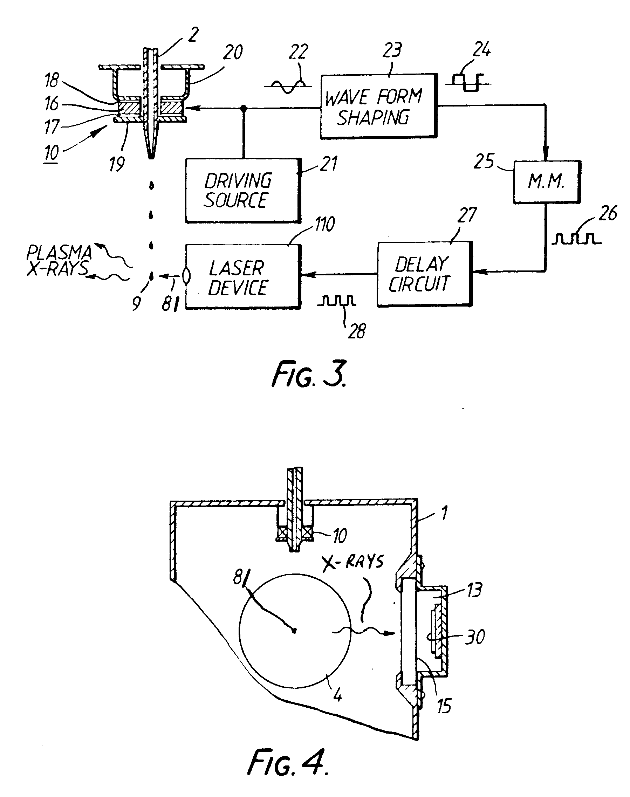

Figure 3 is a schematic diagram of control means for the x-ray apparatus shown in Figure 1;

Figure 4 is a schematic sectional view of a vessel forming part of the apparatus; and

Figure 5 is an alternative embodiment of the invention.

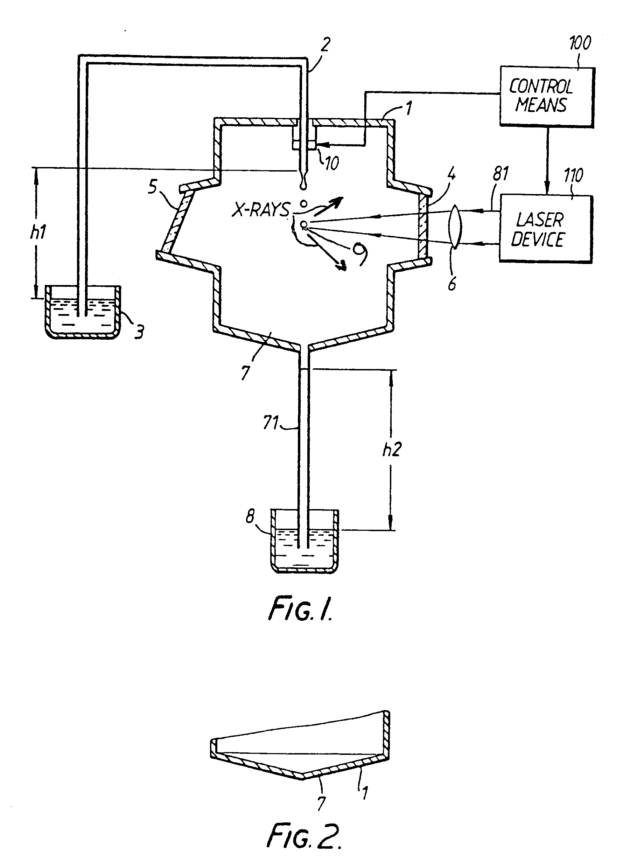

Figure 1 schematically shows an example of apparatus for producing soft x-rays according to the present invention. The apparatus comprises an evacuated vessel 1 having a fine tube 2 leading into the head portion thereof. A reservoir 3 contains mercury for use as a target and the end of the fine tube 2 extends into the reservoir. A window 4 on the side of the vessel wall permits a laser beam to enter into the vessel. There is an additional window 5 for the egress of x-rays. A control means 100 serves to control the timing of the mercury drops falling from the end of the fine tube and a laser device 110 projects a laser beam 81 into the mercury drops 9 in the vessel 1 through a lens 6 and the window 4. The mercury drops 9 are formed at the end of the fine tube 2 in the vessel by the action of surface tension and are caused to drop by vibration set up by a piezoelectric element 10 which is connected to the fine tube.

An amount q of mercury is as follows:

$$q = \frac{\pi}{128} \cdot \frac{1}{\eta} \cdot \frac{D^4}{\ell} \, ( P_0 - \rho g h_1 )$$

where,

$h_1 =$ difference in height between the end of the fine tube 2 in the vessel and the surface level of mercury in the reservoir 3,

$D =$ inner diameter of the fine tube 2,

$l =$ length of the fine tube 2,

$\eta =$ viscosity of mercury,

$\rho =$ mass density of mercury,

$P_0 =$ pressure on the mercury reservoir (usually atmospheric pressure).

When a mechanical vibration of frequency f (for example 1000Hz) is applied to the tube 2 by the piezoelectric element 10, the mercury drops out of the end of the fine tube with a timing of 1/f cycle in the form of discontinuous drops. The timing cycle of the discontinuous drops is synchronised to the laser pulse timing (for example 100Hz). Then, it is impacted at 1/10 times each. At this time, the drop size d is as follows:-

$$d = \left( \frac{3}{64} \right)^{1/3} \cdot D^{4/3} \left( \frac{P_0 - \rho g h_1}{\ell \cdot \eta \cdot f} \right)^{1/3}$$

The drop size d decides to in focus point size of grade of the laser beam spot, for example, d is 0.5 mm - 2 mm. A stable range for producing the drops are selected with a size of the fine tube and a height $h_1$.

The height difference between the end of the fine tube 2 and the surface of the mercury in the reservoir 3 ($h_1$), the inner diameter of the fine tube 2 (D) and the length of the fine tube 2 ($\ell$) are decided so that the drops do not flow continuously from the tube, which is related to the following equation:

$$\frac{D^5}{\ell^2} \left( P_0 - \rho g h_1 \right)^2 \leq 4096 \, \eta^2 \frac{\sigma}{\rho}$$

and, by the vibration, one drop is dropped into the vessel with each pulse of the vibration.

A reservoir 8 and fine tube 71 enable the target material to be collected, as shown in Figure 1, but, as shown in Figure 2, the target material may collect in the bottom 7 of the vessel.

The piezoelectric element 10 is constructed with a ceramic portion 16, electrodes 17, 18 and a brim portion 19 attaching the end of the fine tube 2 and the electrode 17. The element is operated by a driving source 21 outputting a sine wave 22. The electrode 18 is fixed to the wall of the vessel 1 with a stud 20. The signal 22 is shaped to a suitable pulse signal 28 for use with the laser device 110 through a wave form shaping circuit 23 shaping a signal 24, mono-multi vibrator 25 generating a signal 26 and a delay circuit 27. The signal 28 operates the laser device 110 in synchronism with the drops of mercury.

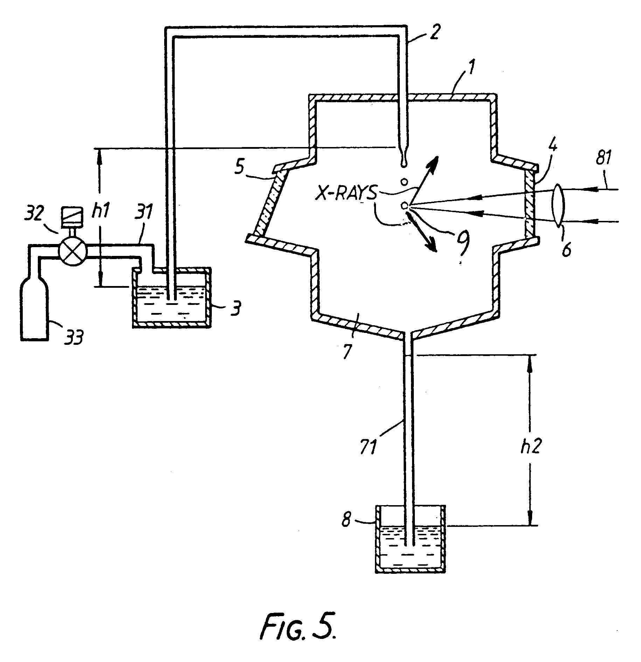

Figure 4 shows the invention applied to the lithography of a semiconductor body 30 mounted at a window 13 of the vessel which is sealed with a polyethylene thin film 15 which is permeable to Xrays.

Figure 5 shows another embodiment of this invention in which a high speed electromagnetic valve 32 is used for displacing the mercury 3 by controlling compressed air 33 which is applied to the mercury reservoir 3 through a pipe 31. The timing of the valve 32 is synchronised to the laser pulse timing. The

3

pressure $\Delta P$ is given by the following equation:

$$\frac{D^5}{\ell^2} \left( P_0 + \Delta P - \rho g \, h_1 \right)^2 > 4096 \, \eta^2 \frac{\sigma}{\rho}$$

The liquid material target may be one of the group consisting of indium, gallium, cesium or potassium at an elevated temperature, or a low melting point metal with a melting point less than $100°C$.

A quantity of helium at low pressure may be present in the vessel 1.

## Claims

1. Apparatus for producing x-rays comprising a low pressure vessel (1); a window (4) in the wall of the vessel; means (110) located outside the vessel for generating a high energy laser beam and directing it through the window to an impact area in the vessel; a liquid target at the impact area in the vessel, said target serving to emit x-rays when impacted by the laser beam; characterised in the provision of a dispenser (10) by which discontinuous drops (9) of the target liquid are allowed to fall to the impact area ; and control means (100) which serves both to operate the dispenser to produce a drop of the target liquid and to generate the high energy laser beam so as to synchronise the arrival of the drop and the high energy laser beam at the impact area.

2. Apparatus according to claim 1, characterised in that said target is of a metal with a melting point less than 100ºC.

3. Apparatus according to claim 2, characterised in that said target is mercury.

4. Apparatus according to claim 1, characterised in that said target is one of the group comprising indium, gallium, cesium or potassium at an elevated temperature.

5. Apparatus according to any preceding claim, characterised in that said low pressure vessel contains helium under low pressure.

6. Apparatus according to claim 1, characterised in that said control means comprises pulse drive means for generating pulses of the laser beam and pulse delay means for delaying the pulses of the laser beam to synchronise the pulses of the laser beam with the discontinuous drops of said liquid material target.

7. Apparatus according to claim 1, characterised in that said control means further comprises vibration means coupled to said target supply means for vibrating said target supply means to disperse said discontinuous drops of said liquid target.

8. Apparatus according to any preceding claim, characterised in that it further comprises recovery means coupled to said low pressure vessel for recovering the liquid material forming said liquid material target after impact by the laser beam.

9. Apparatus according to claim 8, characterised in that said recovery means comprises a fine tube attached near the bottom of said low pressure vessel and a reservoir connected to said fine tube for recovering the liquid material flowing through said fine tube.

## Revendications

1. Dispositif pour produire des rayons X mous qui comprend une enceinte ou un récipient à basse pression (1); une fenêtre (4) ménagée dans la paroi de ladite enceinte; des moyens (110) situés à l'extérieur de l'enceinte pour engendrer un faisceau de rayons laser à haute énergie et pour le diriger, à travers la fenêtre, sur une zone d'impact située à l'intérieur de l'enceinte; une cible liquide à la zone d'impact dans l'enceinte, ladite cible servant à émettre des rayons X sous l'impact du rayon laser, caractérisé par la présence d'un distributeur (10) au moyen duquel des gouttes discontinues (9) du liquide de la cible peuvent tomber sur la zone d'impact, et des moyens de commande (100) qui servent, à la fois, à actionner le distributeur pour produire une goutte du liquide de la cible et pour engendrer un rayon laser à haute énergie de façon à synchroniser l'arrivée de la goutte et le faisceau laser à haute énergie à la zone d'impact.

2. Dispositif selon la revendication 1, caractérisé en ce que la cible est en un métal dont le point de fusion est inférieur à 100°C.

3. Dispositif selon la revendication 2, caractérisé en ce que ladite cible est en mercure.

4. Dispositif selon la revendication 1, caractérisé en ce que la cible est en un métal choisi dans le groupe comprenant l'indium, le gallium, le césium ou le potassium.

5. Dispositif selon l'une quelconque des revendications précédentes caractérisé en ce que ladite enceinte contient de l'hélium à basse pression.

6. Dispositif selon la revendication 1, caractérisé en ce que les moyens de commande comprennent des moyens pour engendrer des impulsions de rayons laser et des moyens de temporisation pour retarder les impulsions de rayons laser afin de synchroniser ces dernières avec les gouttes dicontinues du liquide de la cible.

7. Dispositif selon la revendication 1, caractérisé en ce que lesdits moyens de commande comprennent aussi des moyens de vibration couplés aux moyens produisant la cible afin de faire vibrer ces derniers en dispersant ainsi lesdites gouttes discontinues de ladite cible liquide.

8. Dispositif selon l'une quelconque des revendications précédentes, caractérisé en ce qu'il comprend aussi des moyens de récupération coopérant avec ledit récipient à basse pression pour récupérer le liquide formant ladite cible après l'impact du faisceau de rayons laser.

9. Dispositif selon la revendication 8, caractérisé en ce que lesdits moyens de récupération comprennent un fin tube fixé près du fond de ladite enceinte à basse pression, et un réservoir relié audit tube pour récupérer le liquide traversant ce dernier.

**Patentansprüche**

1. Vorrichtung zur Erzeugung von Röntgenstrahlen mit einem Unterdruckbehälter (1); einem Fenster (4) in der Wand des Behälters; einer Einrichtung (110) außerhalb des Behälters zur Erzeugung eines hochenergetischen Laserstrahls und zur Führung dieses Laserstrahls durch das Fenster in ein Auftreffgebiet innerhalb des Behälters; einem flüssigen Target in dem Auftreffgebiet in dem Behälter, wobei das Target zum Aussenden von Röntgenstrahlen dient, wenn es mit dem Laserstrahl beschossen wird; **gekennzeichnet** durch die Bereitstellung eines Dispensers (10), der es ermöglicht, separat austretende Tropfen (9) der Targetflüssigkeit in das Auftreffgebiet fallenzulassen; und einer Steuereinrichtung (100), die sowohl den Dispenser betreibt, um Tropfen der Targetflüssigkeit zu erzeugen, als auch zur Erzeugung des hochenergetischen Laserstrahls dient, um so die Ankunft des Tropfens und die des hochenergetische Laserstrahls im Auftreffgebiet zu synchronisieren.

2. Vorrichtung nach Anspruch 1, **dadurch gekennzeichnet**, daß das Target aus einem Metall besteht, dessen Schmelzpunkt bei weniger als 100 °C liegt.

3. Vorrichtung nach Anspruch 2, **dadurch gekennzeichnet**, daß das Target aus Quecksilber besteht.

4. Vorrichtung nach Anspruch 1, **dadurch gekennzeichnet**, daß das Target aus einem Material der Gruppe Indium, Gallium, Zäsium oder Kalium bei erhöhter Temperatur besteht.

5. Vorrichtung nach einem der vorhergehenden Ansprüche, **dadurch gekennzeichnet**, daß der Unterdruckbehälter Helium unter niedrigen Druck enthält.

6. Vorrichtung nach Anspruch 1, **dadurch gekennzeichnet**, daß die Steuereinrichtung eine Pulsbetriebseinrichtung zur Erzeugung von Pulsen des Laserstrahls und eine Pulsverzögerungseinrichtung zur Verzögerung der Pulse des Laserstrahls enthält, um so die Pulse des Laserstrahls mit den separaten Tropfen des flüssigen Targetmaterials zu synchronisieren.

7. Vorrichtung nach Anspruch 1, **dadurch gekennzeichnet**, daß die Steuereinrichtung weiterhin eine Vibrationseinrichtung enthält, die an die Targetzufuhreinrichtung gekoppelt ist, um die Targetzufuhreinrichtung in Vibration zu bringen, die dann die separaten Tropfen des flüssigen Targets abgibt.

8. Vorrichtung nach einem der vorhergehenden Ansprüche, **dadurch gekennzeichnet**, daß die Vorrichtung weiterhin Rückgewinnungsmittel aufweist, die mit dem Unterdruckbehälter verbunden sind, um die Flüssigkeit, die das flüssige Targetmaterial bildet, nach Auftreffen des Laserstrahls zurückzugewinnen.

9. Vorrichtung nach Anspruch 8, **dadurch gekennzeichnet**, daß die Rückgewinnungsmittel eine dünne Röhre, die nahe dem Boden des Unterdruckbehälters angebracht ist, und einen Auffangbehälter aufweisen, der mit der dünnen Röhre in Verbindung steht, um das flüssige Material, welches durch die dünne Röhre fließt, aufzufangen.

FIG. 1.

FIG. 2.

**FIG. 3.**

**FIG. 4.**

FIG. 5.